# EUROPÄISCHE PATENTSCHRIFT

(11) **EP 4 288 382 B1**
(45) Veröffentlichungstag und Bekanntmachung des Hinweises auf die Patenterteilung: **09.07.2025**
(21) Anmeldenummer: 22714805.3
(22) Anmeldetag: 14.03.2022
(51) Int. Cl.: C01B 3/30, B01J 8/12, B01J 8/42, B01J 19/08, B01J 19/00, B01J 8/08

(54) **REAKTOR UND VERFAHREN ZUR PYROLYSE VON KOHLENWASSERSTOFFHALTIGEN FLUIDEN**
REACTOR AND METHOD FOR THE PYROLYSIS OF HYDROCARBON-CONTAINING FLUIDS
RÉACTEUR ET PROCÉDÉ DE PYROLYSE DE FLUIDES CONTENANT DES HYDROCARBURES

(30) Priorität: 15.03.2021 DE 102021202465
(43) Veröffentlichungstag der Anmeldung: 13.12.2023
(73) Patentinhaber: thyssenkrupp Uhde GmbH, 44141 Dortmund (DE); thyssenkrupp AG, 45143 Essen (DE)
(72) Erfinder: ANTWEILER, Nicolai, 45149 Essen (DE)
(74) Vertreter: thyssenkrupp Intellectual Property GmbH
(86) Internationale Anmeldenummer: PCT/EP2022/056534
(87) Internationale Veröffentlichungsnummer: WO 2022/194775

(56) Entgegenhaltungen:
- DE-A1- 102018 132 661
- DE-A1- 102019 002 523
- DE-A1- 102019 003 982
- US-A- 2 799 640

## Beschreibung

Die vorliegende Erfindung betrifft einen Reaktor zumindest zur Pyrolyse von kohlenwasserstoffhaltigen Fluiden zumindest zur Erzeugung von wenigstens wasserstoffhaltigen Fluiden, wobei der Reaktor einen Reaktormantel sowie einen innerhalb des Reaktormantels angeordneten Reaktorschacht aufweist und zwischen dem Reaktormantel und dem Reaktorschacht eine Reaktorausmauerung zumindest zur thermischen Abdichtung des Reaktorschachtes gegen den Reaktormantel angeordnet ist. Ferner betrifft die Erfindung ein Verfahren zumindest zur Pyrolyse von kohlenwasserstoffhaltigen Fluiden zumindest zur Erzeugung von wenigstens wasserstoffhaltigen Fluiden, wobei die kohlenwasserstoffhaltigen Fluide einem Reaktorschacht des Reaktors in Gegenströmung zu einem aus Partikeln bestehenden Wanderbett des Reaktors zugeführt werden.

### STAND DER TECHNIK

Es ist grundlegend bekannt, dass stark endotherme Reaktionen, welche bekannter Weise bei der chemischen Industrie beispielsweise bei der Spaltung von Erdölfraktionen oder der Reformierung von Erdgas oder Naphtha auftreten, Temperaturen insbesondere im Bereich zwischen 500°C und 1700°C erforderlich machen, um eine hinreichende chemische Zersetzung zu ermöglichen. Dies ist begründet in der thermodynamischen Limitierung des Gleichgewichtsumsatzes. Auch die thermische Zersetzung von Kohlenwasserstoffen erfordert hohe Temperaturen, insbesondere im Bereich von 800 bis 1600°C. Insbesondere auch für die Methanpyrolyse sind aufgrund des thermodynamischen Gleichgewichtes und der Reaktionskinetik derartig hohe Temperaturen erforderlich, um innerhalb kürzester Zeit ausreichend hohe Konversationsraten, vorteilhaft von mehr als 50% zu erreichen.

Aus dem Stand der Technik sind unterschiedliche Lösungen bekannt, welche die Bereitstellung von hohen Temperaturen zur Ermöglichung eines Pyrolyseverfahrens aufzeigen. So werden in den Schriften US 2,389,636 und US 2,600,07 sowie US 5,486,216 und US 6,670,058 die Verwendung einer festen Schüttung als Wärmeträger beschrieben. Hierbei ist jedoch anzumerken, dass es dabei nachteilig zu einem Auftreten von Oberflächeneffekten im Bereich Adhäsion, Agglomerieren und Abrasion kommen kann.

Oxidative Verfahren als Wärmequelle sind beispielsweise in der DE600 16 59T oder der US 3,264,210 beschrieben. Nachteilig an der direkten Verwendung von oxidativen Verfahren ist beispielsweise das Einbringen von Fremdstoffen in die Reaktionszone und folglich eine Kontamination der Produkte. Auch besteht die Gefahr, dass der Kohlenstoff ungewollt abbrennt oder der Eduktstrom mitverbrannt wird.

Die US 2,799,640 oder DE 1 266 273 offenbaren jeweils eine elektrische Wärmequelle. Als nachteilig wird hierbei die ungleichmäßige Aufheizung der Reaktionszone angesehen, aufgrund welcher Instabilitäten des elektrischen Wärmeeintrages es zu Inhomogenitäten innerhalb des Reaktionsraumes bei der Pyrolyse, insbesondere der Methanpyrolyse zur Herstellung von Wasserstoff und Pyrolysekohlenstoff (CH4 <-> C+2H2) kommt.

Weitere Reaktoren zur Methanpyrolyse sind aus DE 10 2019 003 982 A1, DE 10 2018 132 661 A1 und DE 10 2019 002 523 A1 bekannt.

Die thermische Pyrolyse von Methan ist eine stark endotherme Reaktion die kinetisch und thermodynamisch vorteilhaft in einem Temperaturbereich von ca.1000°C und Drücken bis 40bar stattfindet. Durch die thermische Spaltung fällt zusätzlich zum Wasserstoff (H2) auch Pyrolysekohlenstoff (C) an, welcher wiederum ein zusätzliches Wertprodukt darstellt. Der Wasserstoff und der Pyrolysekohlenstoff werden vorteilhaft weiterverarbeitet bzw. weiterverwendet und dienen als Treibstoff oder als Brennstoff in anderen Antrieben, Anlagen oder Industriezweigen.

Es ist als grundlegend bekannt anzusehen, dass bei der Pyrolyse auch eine Partikelschüttung, insbesondere eine Schüttung aus Kohlenstoffpartikeln zum Einsatz gelangt, auf welcher das kohlenstoffhaltige Gas, wie Methangas pyrolysiert. Der elektrische Wärmeeintrag, insbesondere über eine Widerstandsbeheizung, ist für die Bereitstellung der Reaktionsenthalpie vorteilhaft geeignet.

Bei der Verwendung einer Kohlenstoffschüttung fließt der elektrische Strom, welcher beispielsweise über den Einsatz von Elektroden bzw. Elektrodenpaaren in den Reaktionsraum eingebracht wird, über diese Schüttung und dissipiert aufgrund des elektrischen Widerstandes der Partikelschüttung in thermische Energie. Der elektrische Widerstand resultiert aus den Kontaktpunkten zwischen den Partikeln der Schüttung bzw. den geringen Übertragungsflächen, während die Kohlenstoffpartikel eine hohe elektrische Leitfähigkeit besitzen. Für einen im Wesentlichen homogenen Wärmeeintrag in die Beheizungszone des Reaktionsraumes ist ein zumindest zeitweise abschnittsweiser homogener elektrischer Widerstand über die gesamte Querschnittsfläche des Reaktionsraumes erforderlich. Jedoch treten bekannter Weise immer wieder Pfade mit abweichendem elektrischem Widerstand auf, sodass der elektrische Strom bevorzugt in den Bereichen des geringeren elektrischen Widerstandes fließt. In der Folge findet eine vermehrte Ablagerung des pyrolytischen Kohlenstoffes in diesen Bereichen statt, sodass sich der Widerstand entlang dieser Pfade des geringeren Widerstandes immer weiter reduziert. Die Konsequenz sind Inhomogenitäten, welche zu lokalen Hotspots, einer lokalen drastischen Reduktion des elektrischen Widerstandes, zu Verblockungen und letztlich um Versagen der Beheizung führen. Interne Versuchen haben gezeigt, dass es bei bekannten Reaktoren, insbesondere bekannten Reaktorgeometrien (insbesondere bekannten Reaktionsraumgeometrien) und bekannten Verfahren zu Pyrolyse, beispielsweise von Methan, innerhalb des Reaktionsraumes zu einer zentrisch angeordneten Kohlenstoffformation, welche sich in vertikaler Längsrichtung zentrisch entlang des Reaktionsraumes zumindest abschnittsweise erstreckt, kommt. Diese Kohlenstoffformation besteht aus zusammengewachsenen Kohlenstoffpartikeln. Dies verdeutlicht, dass die durchgeführte Pyrolyse nicht über den gesamten Querschnitt des Reaktionsraumes, sondern nur primär im Zentrum des Reaktionsraumes stattgefunden hat.

### OFFENBARUNG DER ERFINDUNG

Die Ursachen für das Auftreten der Inhomogenitäten bei bekannten Reaktionsräumen und bekannten Pyrolyseverfahren und folglich dem Versagen des Beheizungskonzeptes bekannter Reaktoren wurde intern von der Anmelderin untersucht. Es wurde festgestellt, dass aufgrund des hohen Verhältnisses von Wandfläche des Reaktionsraumes zu Reaktionsvolumen des Reaktionsraumes ein starkes radiales Temperaturprofil vorliegt. Die höhere Temperatur in der Mitte des Reaktionsraumes führt zu höheren Umsätzen, sprich zu einer höheren Ablagerung von Kohlenstoff an den Partikeln der Schüttung und folglich zu einer größeren Kohlenstoffabscheidung aus dem kohlenstoffhaltigen Gas, wie Methangas. Die Konsequenz ist der geringere elektrische Widerstand in diesem Bereich und folglich ein damit einhergehender bevorzugter Stromfluss in dem Bereich des geringeren elektrischen Widerstandes.

Es ist daher die Aufgabe der vorliegenden Erfindung, die voranstehend beschriebenen Nachteile bei bekannten Reaktoren und Pyrolyseverfahren zumindest teilweise zu beheben. Insbesondere ist es die Aufgabe der vorliegenden Erfindung einen Reaktor sowie ein Verfahren zumindest zur Pyrolyse von kohlenwasserstoffhaltigen Fluiden zu schaffen, die auf eine einfache und kostengünstige Art und Weise eine über den Querschnitt des Reaktorschachtes (Reaktionsraumes) im Wesentlichen homogene Beheizung des Reaktorschachtes und folglich die Erzeugung und Aufrechterhaltung eines zumindest zeitweise abschnittsweisen homogenen elektrischen Feldes mit entsprechendem zumindest zeitweise abschnittsweisen homogenem Widerstand ermöglichen.

Die voranstehende Aufgabe wird gelöst durch einen Reaktor zumindest zur Pyrolyse von kohlenwasserstoffhaltigen Fluiden mit den Merkmalen des Anspruchs 1 sowie durch ein Verfahren zumindest zur Pyrolyse von kohlenwasserstoffhaltigen Fluiden mit den Merkmalen gemäß Anspruch 6. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Reaktor beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann. Dabei wird das erfindungsgemäße Verfahren in dem erfindungsgemäßen Reaktor durchgeführt.

Der erfindungsgemäße Reaktor zumindest zur Pyrolyse von kohlenwasserstoffhaltigen Fluiden zumindest zur Erzeugung von wenigstens wasserstoffhaltigen Fluiden weist einen Reaktormantel sowie einen innerhalb des Reaktormantels angeordneten Reaktorschacht auf. Zwischen dem Reaktormantel und dem Reaktorschacht ist eine Reaktorausmauerung zumindest zur thermischen Abdichtung des Reaktorschachtes gegen den Reaktormantel angeordnet. Erfindungsgemäß weist der Reaktorschacht eine im Querschnitt zumindest viereckige, insbesondere rechteckige Geometrie auf, wobei an zwei einander gegenüberliegenden Seitenwandungen des Reaktorschachtes jeweils zumindest eine Elektrode zur Erzeugung thermischer Energie angeordnet ist. Es ist zudem denkbar, dass die Reaktorausmauerung auch zur elektrischen Isolation dient, sodass die von den Elektroden erzeugte elektrische Energie nicht an die Außenumgebung des Reaktors abgegeben wird. Als Fluide werden im Sinne der Erfindung auch Gase oder Flüssigkeiten verstanden. Kohlenwasserstoffhaltige Fluide können dementsprechend beispielsweise Methan (Methangas), Erdgas oder Blaugas sein. Unter dem Begriff der "kohlenwasserstoffhaltigen Fluide" sind im Rahmen der Erfindung folglich alle Fluide (Gase/Flüssigkeiten) zu verstehen, welche Kohlenwasserstoff enthalten, der mittels eines Pyrolyseverfahrens in Kohlenstoffe und Wasserstoffe dissoziiert werden kann. Der Reaktormantel des Reaktors weist vorteilhaft eine im Querschnitt ringförmige/kreisförmige Geometrie auf. Dies ist vorteilhaft, um insbesondere hohen Drücken Stand zu halten. Es wäre jedoch auch denkbar, dass der Reaktormantel im Vergleich zum Reaktorschacht, welcher auch als Reaktionsraum bezeichnet werden kann, ebenfalls einen im Querschnitt zumindest viereckige Geometrie aufweist und besonders vorteilhaft der Geometrie des Reaktorschachtes angepasst ist. Der Reaktorschacht kann vorteilhaft auch eine im Querschnitt rechteckige, insbesondere quadratische Geometrie aufweisen. Der Reaktorschacht weist im Querschnitt eine Geometrie mit vier oder mehr als vier Ecken auf.

Besonders vorteilhaft sind zumindest zwei sich gegenüberliegende Wandungen, insbesondere Innenwandungen des Reaktorschachtes, im Querschnitt des Reaktorschachtes betrachtet, parallel einander gegenüberliegend ausgebildet. An diesen parallel einander gegenüberliegend ausgebildeten Wandungen bzw. Wänden sind vorteilhaft die Elektroden zur Erzeugung eines zumindest zeitweise abschnittsweisen homogenen elektrischen Feldes, insbesondere eines im Wesentlichen homogenen elektrischen Feldes, innerhalb des Reaktorschachtes angeordnet. Vorteilhaft sind die Elektroden auch einander gegenüberliegend, also in gleicher Höhe - in Längsrichtung des Reaktorschachtes betrachtet - angeordnet. Besonders vorteilhaft sind die Elektroden auf der Innenseite der Seitenwandungen des Reaktorschachtes angeordnet. Durch die Anordnung der Elektroden wird vorteilhaft eine direkte elektrische, resistive Beheizung der Partikel des Wanderbettes, insbesondere der Partikelschüttung bereitgestellt. Die viereckige, insbesondere die rechteckige, insbesondere die quadratische Geometrie des Reaktorschachtes und die entsprechend beschriebene Anordnung der Elektroden ermöglichen die Erzeugung eines zumindest zeitweise abschnittsweisen homogenen elektrischen Potentialfeldes zwischen den einander gegenüberliegenden Elektroden. Des Weiteren wird dadurch das Entstehen eines Schlupfes für die Stoffströme und ein damit einhergehender verringerter Umsatz vermieden.

Es ist denkbar, dass die Partikel des Wanderbettes eine Größe von 0,5mm bis 20mm, bevorzugt von 1mm bis 10mm aufweisen. Das Verfahren zur Pyrolyse des kohlenstoffhaltigen Fluides findet vorteilhaft bei Drücken von 1bar bis 50bar, bevorzugt von 5bar bis 30bar statt. Hierbei werden Temperaturen von 800°C bis 1600°C, bevorzugt von 1000°C bis 1400°C erzeugt.

Gemäß einer Ausführungsform sind die einander gegenüberliegenden Elektroden in vertikaler Längsrichtung des Reaktors betrachtet zumindest abschnittsweise in der Mitte des Reaktorschachtes angeordnet. Das bedeutet, dass zumindest ein Abschnitt eines jeden Reaktors eine (gedachte) Mittellinie (Mittelpunkt des Reaktors in Längsrichtung/im Längsschnitt betrachtet) des Reaktors kontaktiert bzw. sich bis zu dieser erstreckt, während der verbleibende Abschnitt der jeweiligen Elektrode in einem unterhalb oder oberhalb dieser gedachten Mittellinie existenten Reaktorschachtbereich angeordnet ist. Genauer gesagt, wäre es denkbar, dass die jeweiligen Elektroden in einem zum Reaktorkopf des Reaktors zugewandten Abschnittes des Reaktorschachtes oder in einem zum Reaktorsumpf (Reaktorboden) des Reaktors zugewandten Bereich des Reaktorschachtes angeordnet sind. Alternativ ist es jedoch auch denkbar, dass die jeweiligen Elektroden genau mittig des Reaktorschachtes (in Längsrichtung/im Längsschnitt betrachtet) angeordnet sind. Alternativ ist es denkbar, dass keine der Elektroden eines Elektrodenpaares in vertikaler Längsrichtung des Reaktors betrachtet zumindest abschnittsweise in der Mitte des Reaktorschachtes an der Reaktorschachtwandung bzw. Seitenwandung des Reaktorschachtes angeordnet ist. Vielmehr befinden sich die Elektroden dann ausschließlich in einem unterhalb oder oberhalb dieser gedachten Mittellinie existenten Reaktorschachtbereich an der Reaktorschachtwandung angeordnet.

Gemäß einer Ausführungsform sind an den zwei einander gegenüberliegenden Seitenwandungen des Reaktorschachtes jeweils zumindest zwei oder mehr Elektroden zur Erzeugung thermischer Energie angeordnet. Vorteilhaft sind jeweils immer zwei der einander gegenüberliegenden Elektroden in gleicher Höhe - in Längsrichtung des Reaktorschachtes betrachtet - angeordnet, sodass diese Elektroden ein Elektrodenpaar, insbesondere ein einander gegenüberliegendes Elektrodenpaar bilden. Genauer gesagt, ist es denkbar, dass eine Vielzahl an Elektrodenpaaren im Reaktor angeordnet ist. Die Elektroden können dabei unterschiedlichste geometrische Ausgestaltungen aufweisen. Es ist demnach denkbar, dass die Elektroden eines Elektrodenpaares viereckig, insbesondere rechteckig oder auch quadratisch ausgestaltet sind. Ebenfalls sind kreisrunde, ovale bzw. elliptische oder vieleckige Elektroden denkbar. Auch die Verwendung von Elektroden in Gestalt eines Gitters, auch Gitterelektroden genannt, ist möglich. Die geometrische Formgebung und Ausgestaltung der Elektroden soll im Rahmen der Erfindung nicht auf eine definierte Form begrenzt sein. Vorteilhaft ist jedoch, wenn beide Elektroden eines Elektrodenpaares eine zueinander identische, zumindest jedoch vergleichbare geometrische Gestalt aufweisen. Weiterhin wäre es möglich, wenn innerhalb eines Reaktors, insbesondere an der Seitenwandung des Reaktorschachtes, Elektrodenpaare zum Einsatz gelangen, welche jeweils eine zueinander unterschiedliche Gestalt aufweisen. Dies kann hinsichtlich der dadurch unterschiedlich ausgeprägten elektrischen Felder und des damit einhergehenden unterschiedlichen Wärmeeintrages in den verschiedenen Höhenbereichen des Reaktorschachtes vorteilhaft sein. Die Verwendung bzw. Anordnung von mehreren Elektrodenpaaren innerhalb des Reaktorschachtes ermöglicht vorteilhaft die Einstellung unterschiedlicher axialer Temperaturzonen. Demnach ist vorteilhaft bei einem unterschiedlichen Widerstandsverhalten des Partikelmaterials des Wanderbettes eine gezielte Einstellung der Temperatur über Feldparameter möglich.

Des Weiteren ist zumindest eine der Elektroden pro Seitenwandung des Reaktorschachtes in vertikaler Längsrichtung des Reaktors betrachtet zumindest abschnittsweise in der Mitte des Reaktorschachtes angeordnet oder sind jede der Elektroden pro Seitenwandung zumindest oberhalb oder unterhalb der Mitte des Reaktorschachtes angeordnet. Genauer gesagt, befindet sich bei der Anordnung von zwei und mehr Elektrodenpaaren im Reaktorschacht entweder zumindest ein Elektrodenpaar derart im mittleren Bereich des Reaktorschachtes, dass wenigstens ein Abschnitt jeder Elektrode dieses Elektrodenpaares eine (gedachte) Mittellinie des Reaktorschachtes (in Längsrichtung des Reaktorschachtes betrachtet) kontaktiert. Dabei kann es sich um ein mittleres Elektrodenpaar oder auch um eines der äußeren Elektrodenpaare handeln. Oder die Elektrodenpaare liegen jeweils oberhalb dieser gedachten Mittellinie oder unterhalb dieser gedachten Mittellinie oder rahmen diese gedachte Mittellinie derart ein, dass wenigstens ein Elektrodenpaar oberhalb und wenigstens ein Elektrodenpaar unterhalb dieser gedachten Mittellinie angeordnet ist, wobei keines der Elektrodenpaare, insbesondere die Elektroden eines Elektrodenpaares, diese gedachte Mittellinie kontaktieren.

Vorteilhaft sind die Elektroden derart angeordnet, dass diese Elektroden ein im Querschnitt betrachtet im Wesentlichen homogenes elektrisches Feld, insbesondere ein zumindest zeitweise abschnittsweises homogenes elektrisches Feld erzeugen. Dieses elektrische Feld (Potentialfeld) erstreckt sich vorteilhaft horizontal über die gesamte Breite und Tiefe (Fläche) des Reaktorschachtes.

Gemäß eine Ausführungsform weist der Reaktor einen Reaktorkopf sowie einen Reaktorsumpf, welcher auch als Reaktorboden bezeichnet werden kann, auf. Dabei weisen der Reaktorkopf sowie der Reaktorsumpf jeweils zumindest zeitweise verschließbare Zuführöffnungen sowie Ausführöffnungen auf, durch welche zumindest Fluide, wie Gase oder Flüssigkeiten, und/oder Feststoffe, insbesondere Partikel, einzubringen oder auszubringen sind, sodass zur Erzeugung eines Wanderbettes durch den Reaktorkopf zumindest zeitweise kontinuierlich Partikel in den Reaktorschacht eingebracht sind. Anstelle eines Wanderbettes ist es auch denkbar ein Fließbett oder ein Wirbelstrombett zu verwenden. Durch das Wanderbett werden vorteilhaft Partikel, insbesondere kohlenstoffhaltige Partikel in den Reaktor, insbesondere in den Reaktorschacht des Reaktors eingebracht und vorteilhaft durch den Reaktorschacht - ausgehend von dem Reaktorkopf bis zum Reaktorsumpf - bewegt bzw. transportiert. Vorteilhaft wandern die Partikel des Wanderbettes bzw. die Schüttung schwerkraftgetrieben und/oder gravimetrisch durch den Reaktorschacht. Die Partikel des Wanderbettes nehmen dann den Kohlenstoff der in den Reaktorschacht eingebrachten kohlenwasserstoffhaltigen Fluide auf und transportieren diesen vorteilhaft über den Reaktorsumpf aus dem Reaktorschacht hinaus. Im Falle der Pyrolyse von Methan heizen sich die Partikel auf und Methan zersetzt sich bevorzugt auf den aufgeheizten Partikeln. Ein Teil wird sich auch im Zwischenvolumen zersetzen und auf die dargestellte Weise ausgetragen. Durch den kontinuierlichen Abtransport des Kohlenstoffes bzw. der kohlenstoffhaltigen Partikel wird die Aufrechterhaltung des angestrebten zumindest zeitweise abschnittsweisen homogenen elektrischen Feldes und folglich die im Wesentlichen homogene Wärmeverteilung zumindest in der Beheizungszone des Reaktorschachtes sichergestellt. Die Zuführöffnungen bzw. die Ausführöffnungen ermöglichen vorteilhaft ein kontinuierliches Einbringen oder Ausbringen der zur Reaktion zu bringenden Stoffe bzw. der bereits durch die Pyrolyse vom Kohlenstoff gereinigten Gase.

Es ist des Weiteren denkbar, dass die Elektroden derart angeordnet sind, dass diese ein elektrisches Feld erzeugen, welches zumindest abschnittsweise orthogonal zur Bewegungsrichtung der sich durch den Reaktorschacht bewegenden Partikel des Wanderbettes ausgerichtet ist. Vorteilhaft erzeugen die Elektroden aufgrund deren Anordnung im Reaktorschacht, sprich aufgrund deren Anordnung an zwei einander gegenüberliegenden parallelen Seitenwänden des Reaktorschachtes in zueinander identischer Höhe ein elektrisches Feld, welches vollumfänglich orthogonal zur Bewegungsrichtung des Wanderbettes, insbesondere der Partikel des Wanderbettes, ausgerichtet ist. Das Wanderbett durchwandert dabei, wie zuvor beschrieben, den Reaktorschacht von oben nach unten, sprich ausgehend vom Reaktorkopf, durch welchen die Partikel des Wanderbettes in den Reaktorschacht eingebracht werden, bis zum Reaktorsumpf, der auch als Reaktorboden bezeichnet werden kann. Über entsprechende Austrittsöffnungen werden dann die Partikel des Wanderbettes aus dem Reaktorschacht ausgebracht. Basierend auf der orthogonalen Ausrichtung des elektrischen Feldes zu den Partikeln des Wanderbettes findet vorteilhaft eine gleichmäßige Erwärmung der Partikel des Wanderbettes statt, sodass diese Partikel folglich innerhalb der gesamten Ebene - in Querschnittsrichtung betrachtet - des Reaktorschachtes zur Aufnahme von Kohlenstoff aus kohlenstoffhaltigen Fluiden dienen können. Das Auftreten von lokalen Hotspots wird dadurch vorteilhaft vermieden.

Gemäß einem zweiten Aspekt der Erfindung ist ein Verfahren zumindest zur Pyrolyse von kohlenwasserstoffhaltigen Fluiden, wie beispielsweise Gasen oder Flüssigkeiten, zumindest zur Erzeugung von wenigstens wasserstoffhaltigen Fluiden, wie beispielsweise Gasen oder Flüssigkeiten, beansprucht. Erfindungsgemäß werden die kohlenwasserstoffhaltigen Fluide einem Reaktorschacht eines Reaktors, welcher Reaktorschacht auch als Reaktionsraum bezeichnet werden kann, in Gegenströmung zu einem aus Partikeln bestehenden Wanderbett des Reaktors zugeführt. Erfindungsgemäß werden dabei zumindest die Partikel des Wanderbettes oder die kohlenwasserstoffhaltigen Fluide mittels in dem Reaktorschacht angeordneter Elektroden zur Erzeugung thermischer Energie auf eine definierte Temperatur im Bereich zwischen 800-1600°C, vorzugsweise zwischen 800-1500°C, besonders bevorzugt zwischen 800-1400°C aufgeheizt. Genauer gesagt, ist es denkbar, dass entweder die Partikel des Wanderbettes oder die kohlenwasserstoffhaltigen Partikel oder beides, sprich die Partikel des Wanderbettes und die kohlenwasserstoffhaltigen Fluide mittels der durch die Elektroden erzeugten elektrischen Energie aufgewärmt bzw. erhitzt werden. Vorteilhaft findet eine Pyrolyse, sprich eine Dissoziation von Kohlenstoffen und Wasserstoffen aus den kohlenwasserstoffhaltigen Fluiden ab einer Temperatur von ca. 800°C statt. Vorteilhaft erzeugen die Elektroden vornehmlich in Verbindung mit einem elektrischen Widerstand, wie insbesondere der Partikelschüttung bzw. den Partikeln des Wanderbettes eine Wärme, indem die elektrische Energie in thermische Energie dissipiert.

Erfindungsgemäß wird das Verfahren in einem Reaktor gemäß dem ersten Aspekt der Erfindung, also der vorgenannten Art durchgeführt. Demzufolge werden die zum ersten Aspekt der Erfindung, sprich zum erfindungsgemäßen Reaktor aufgeführten Merkmale hier vollständig herangezogen.

Es ist denkbar, dass die Partikel des Wanderbettes gravimetrisch, insbesondere schwerkraftgetrieben, von einem Reaktorkopf des Reaktors zu einem Reaktorsumpf des Reaktors in vertikaler Längsrichtung des Reaktors nach unten wandern. Demzufolge werden die Partikel des Wanderbettes über eine oder mehrere Zuführöffnungen innerhalb des Reaktorkopfes dem Reaktorschacht zugeführt und wandern durch den Reaktorschacht in Richtung des Reaktorsumpfes. Der Reaktorsumpf weist vorteilhaft zumindest eine oder mehrere Ausführöffnungen auf, über welche die Partikel, welche vorteilhaft nun mit Kohlenstoff beladen sind, aus dem Reaktorschacht entnommen werden.

Vorteilhaft erzeugen die Elektroden, welche im Reaktorschacht, insbesondere an einer Seitenwandung oder Innenwandung des Reaktorschachtes angeordnet sind, ein elektrisches Feld, welches zumindest abschnittsweise, vorteilhaft vollumfänglich, orthogonal zur Bewegungsrichtung der sich durch den Reaktorschacht bewegenden Partikel des Wanderbettes ausgerichtet ist. Demzufolge erstreckt sich das elektrische Feld in Querschnittsrichtung betrachtet im Wesentlichen horizontal. Während die Partikel in Längsrichtung bzw. Längsschnittrichtung betrachtet im Wesentlichen vertikal den Reaktorschacht durchwandern. Hierdurch wird vorteilhaft eine im Wesentlichen vollumfängliche Erwärmung zumindest der Partikel des Wanderbettes wenigstens innerhalb der Beheizungszone des Reaktorschachtes ermöglicht und das Entstehen lokaler Hotspots innerhalb des Reaktorschachtes vermieden oder diesem zumindest entgegengewirkt.

Gemäß einer Ausführungsform werden innerhalb des Reaktorschachtes eine erste Wärmeintegrationszone, eine Reaktionszone, eine Beheizungszone und eine zweite Wärmeintegrationszone ausgebildet. Die einzelnen Zonen werden ausgehend vom Reaktorsumpf (auch Reaktorboden genannt) des Reaktors zum Reaktorkopf des Reaktors, in vertikaler Längsrichtung des Reaktors betrachtet, nacheinander ausgebildet und überlappen sich zumindest teilweise abschnittsweise. Genauer gibt es Zonen, welche sich überlappen und/oder Zonen welche aneinander anschließen, ohne sich zu überlappen. Die Beheizungszone bildet sich vornehmlich in dem Bereich des Reaktorschachtes aus, in welchem die Elektroden angeordnet sind. Es ist denkbar, dass sich die Beheizungszone und die Reaktionszone zumindest abschnittsweise überlappen. Das bedeutet im Umkehrschluss, dass eine Reaktion, sprich eine Dissoziation, insbesondere die Abspaltung des Kohlenstoffes aus den kohlenwasserstoffhaltigen Fluiden bereits - zumindest teilweise - außerhalb der Beheizungszone, insbesondere in der Reaktionszone stattfindet. Die einzelnen Zonen werden nachfolgend - in der Figurenbeschreibung - nochmals genauer erläutert.

Vorteilhaft findet die Pyrolyse zumindest in der Reaktionszone oder in der Beheizungszone statt. Genauer gesagt, ist es denkbar, dass die Pyrolyse, also die Zersetzung der kohlenwasserstoffhaltigen Fluide, insbesondere Gase und folglich die Abspaltung der Kohlenstoffe aus den kohlenwasserstoffhaltigen Fluiden entweder in der Reaktionszone oder in der Beheizungszone oder in beiden Zonen stattfindet. Vorteilhaft findet die Pyrolyse in einem Überlappungsbereich beider Zonen, wie zuvor beschrieben, statt.

Es ist des Weiteren denkbar, dass die kohlenwasserstoffhaltigen Fluide in der ersten Wärmeintegrationszone bereits durch die den kohlenwasserstoffhaltigen Fluiden entgegenströmenden Partikeln des Wanderbettes, welches bereits die Beheizungszone durchwandert haben, zumindest vorgewärmt werden. Genauer werden die kohlenstoffhaltigen Fluide über den Reaktorsumpf (auch Reaktorboden genannt) in den Reaktorschacht, insbesondere über wenigstens eine Zuführöffnung, eingebracht, insbesondere eingeblasen. Demzufolge bewegen sich die kohlenwasserstoffhaltigen Fluide ausgehend vom Reaktorsumpf durch den Reaktorschacht hin zum Reaktorkopf im Wesentlichen in vertikaler Richtung nach oben. Dieser Strömung aus kohlenwasserstoffhaltigen Fluiden wird eine Strömung aus Partikeln des Wanderbettes entgegengesetzt, welche ausgehend vom Reaktorkopf durch den Reaktorschacht hin zum Reaktorsumpf im Wesentlichen vertikal nach unten wandert. Auf dem Weg der Partikel des Wanderbettes durch den Reaktorschacht haben die Partikel vor Eintreffen in der ersten Wärmeintegrationszone bereits zumindest die Beheizungszone durchquert und innerhalb dieser Beheizungszone Wärme bzw. Wärmeenergie aufgenommen. Treffen nun die Partikel des Wanderbettes in der ersten Wärmeintegrationszone auf das kohlenwasserstoffhaltige Fluid, geben die Partikel des Wanderbettes Wärme (Wärmeenergie) an das kohlenwasserstoffhaltige Fluid ab. Folglich wird in der ersten Wärmeintegrationszone das kohlenwasserstoffhaltige Fluid bereits vorgewärmt bevor es die Beheizungszone erreicht. Es ist denkbar, dass das kohlenwasserstoffhaltige Fluid in der ersten Wärmeintegrationszone auf eine Temperatur zwischen 600-800°C vorgeheizt wird. Wird eine Temperatur von mindestens 800°C während des Durchströmens der ersten Wärmeintegrationszone erreicht, bildet sich ab dieser Temperatur die Reaktionszone aus, in welcher die Kohlenstoffe aus den kohlenwasserstoffhaltigen Fluiden abgespalten und an den Partikeln des Wanderbettes angelagert werden. Demnach ist es möglich, dass die Pyrolyse des kohlenwasserstoffhaltigen Fluides bereits in einer Reaktionszone beginnt, welche sich aufgrund der von den Partikeln des Wanderbettes mitgebrachten Wärmeenergie ausbildet. Es ist ebenfalls denkbar, dass die kohlenwasserstoffhaltigen Fluide, welche in den Reaktorschacht des Reaktors eingebracht werden, bereits vor Eintritt vorgeheizt werden und folglich vorgewärmt in den Reaktorschacht einströmen. Dabei ist es denkbar die kohlenwasserstoffhaltigen Fluide auf eine Temperatur von beispielsweise maximal 600°C, vorteilhaft auf eine Temperatur von kleiner 800°C vorzuheizen bzw. vorzuwärmen. Hierdurch kann folglich nach Einbringen der vorgewärmten kohlenwasserstoffhaltigen Fluide in den Reaktorschacht das Ausbilden einer Reaktionszone beschleunigt werden. Insbesondere können die vorgeheizten kohlenwasserstoffhaltigen Fluide schneller auf eine Temperatur von mindestens 800°C in der ersten Wärmeintegrationszone erwärmt werden, als nicht vorgeheizte kohlenwasserstoffhaltige Fluide. Basierend auf dem zeitlich schnelleren Ausbilden der Reaktionszone durch Erreichen der Pyrolysetemperatur von 800°C kann folglich auch die Pyrolyse (im Vergleich zur Pyrolyse bei nicht vorgeheizt eingebrachten kohlenwasserstoffhaltigen Fluiden) zeitlich schneller erfolgen, sodass der gesamte Pyrolyseprozess energieeffizienter bzw. energetisch effizienter durchführbar ist. Es ist bei der Vorheizung bzw. Vorwärmung der kohlenwasserstoffhaltigen Fluide außerhalb des Reaktors oder zumindest außerhalb des Reaktorschachtes (Reaktionsraumes) jedoch darauf zu achten, dass die Temperatur (Pyrolysetemperatur) von 800°C nicht erreicht oder gar überschritten wird, um das Stattfinden der Pyrolyse innerhalb des Reaktorschachtes zu ermöglichen.

Vorteilhaft werden die in den Reaktorschacht eintretenden Partikel des Wanderbettes in der zweiten Wärmeintegrationszone bereits durch ein den Partikeln des Wanderbettes entgegenströmendes aufgeheiztes und aus den kohlenwasserstoffhaltigen Fluiden resultierendes wasserstoffhaltiges Fluides, welches bereits die Beheizungszone durchwandert und Kohlenstoff abgegeben hat, zumindest vorgewärmt. Die zweite Wärmeintegrationszone ist demnach eine Zone, die vom Reaktorkopf in Richtung des Reaktorsumpfes des Reaktors betrachtet der Beheizungszone vorgeschalten ist. Die kohlenwasserstoffhaltigen Fluide, welche zumindest in der Reaktionszone und vorteilhaft auch in der Beheizungszone Kohlenstoffe abspalten, durchströmen dann die zweite Wärmeintegrationszone als wasserstoffhaltige Fluide, die eine entsprechende Wärme (Wärmeenergie) aus der Reaktionszone und letztlich auch aus der Beheizungszone in die zweite Wärmeintegrationszone mit einbringen. Diese Wärmeenergie überträgt sich dann auf die Partikel des Wanderbettes, welche vorteilhaft nicht vorgewärmt in den Reaktorschacht eingebracht werden. Folglich werden die Partikel des Wanderbettes in der ersten Wärmeintegrationszone bereits durch die Wärmeenergie der wasserstoffhaltigen Fluide vorgewärmt, bevor diese die Beheizungszone erreichen.

In einer Ausführungsform werden die mit Kohlenstoff beladenen Partikel des Wanderbettes über den Reaktorsumpf des Reaktors aus dem Reaktorschacht ausgebracht. Es ist denkbar, dass die Partikel des Wanderbettes nachfolgenden Prozessen zugeführt werden, durch welche eine Reinigung der Partikel stattfindet, sprich die Partikel vom Kohlenstoff gereinigt werden, oder durch welche die kohlenstoffbeladenen Partikel weiteren chemischen Prozessen zur Weiterverarbeitung zugeführt werden. Zumindest einige der Partikel des Wanderbettes wachsen hinsichtlich deren Größe aufgrund der erfolgten Reaktion. Die gewachsenen, insbesondere die großen Partikel werden vornehmlich aus dem Prozess ausgeschleust, während die unverändert, insbesondere nahezu unverändert kleinen Partikel rezirkuliert werden. Es ist des Weiteren denkbar, dass zumindest ein Teil der gewachsenen (großen) Partikel gebrochen und/oder gemahlen, insbesondere zerkleinert wird, wobei diese zerkleinerten Partikel dem Prozess wieder zugeführt werden.

Bei dem beschriebenen Verfahren ergeben sich sämtliche Vorteile, die bereits zu einem Reaktor gemäß dem ersten Aspekt der Erfindung beschrieben worden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen des erfindungsgemäßen Reaktors sowie des erfindungsgemäßen Verfahrens werden nachfolgend anhand von Zeichnungen näher erläutert. Es zeigen jeweils schematisch:
- Figur 1: in einer Schnittdarstellung eine Seitenansicht einer Ausführungsform des erfindungsgemäßen Reaktors,
- Figur 2: in einer Schnittdarstellung eine Draufsicht auf die in der Figur 1 gezeigten Ausführungsform des erfindungsgemäßen Reaktors,
- Figur 3: in einer Schnittdarstellung eine Ansicht einer Anordnung von Elektroden einer Ausführungsform des erfindungsgemäßen Reaktors,
- Figur 4: in einer Schnittdarstellung eine Ansicht einer weiteren Anordnung von Elektroden einer Ausführungsform des erfindungsgemäßen Reaktors,
- Figur 5: in einer Schnittdarstellung eine Ansicht einer weiteren Anordnung von Elektroden einer Ausführungsform des erfindungsgemäßen Reaktors,
- Figur 6: eine Draufsicht auf unterschiedliche Geometrien von Elektroden, und
- Figur 7: ein beispielhaftes Temperaturprofil einer Ausführungsform des erfindungsgemäßen Reaktors zur Darstellung des erfindungsgemäßen Verfahrens.

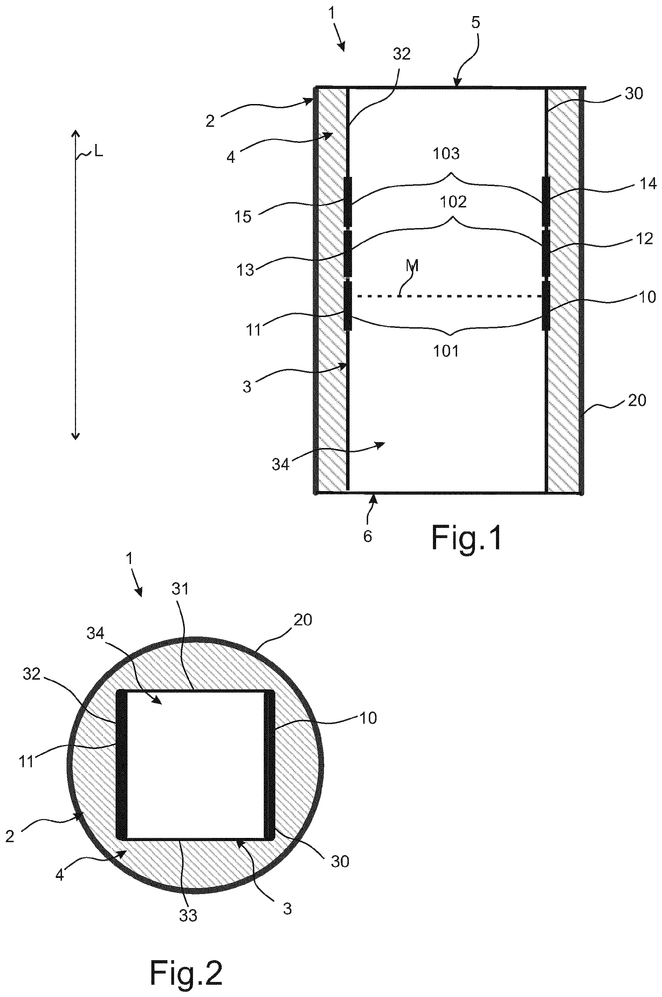

Elemente mit gleicher Funktion und Wirkungsweise sind in den Fig. 1 bis 7 jeweils mit denselben Bezugszeichen versehen.

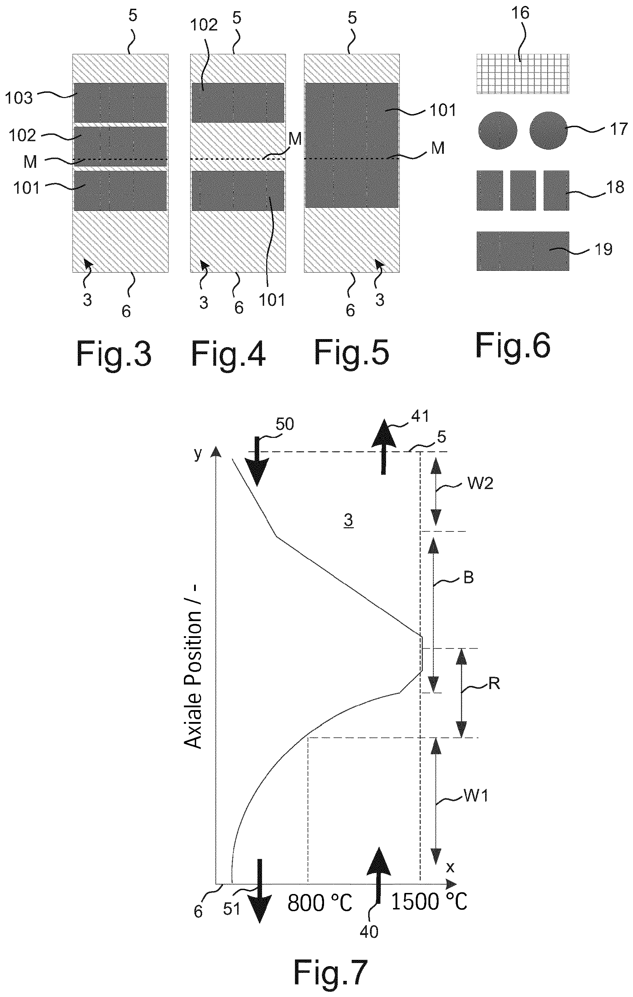

In der Figur 1 ist schematisch in einer Schnittdarstellung eine Seitenansicht einer Ausführungsform eines erfindungsgemäßen Reaktors 1 gezeigt. Genauer handelt es sich hierbei um einen Längsschnitt durch eine Ausführungsform des erfindungsgemäßen Reaktors 1. In der Figur 2 ist in einer Schnittdarstellung eine Draufsicht auf die in der Figur 1 gezeigte Ausführungsform des erfindungsgemäßen Reaktors 1 gezeigt. Genauer ist in der Figur 2 ein Querschnitt durch die in der Figur 1 gezeigte Ausführungsform des erfindungsgemäßen Reaktors 1 gezeigt, welcher sich im Wesentlichen entlang der in der Figur 1 gezeigten Mittellinie M erstreckt. Der Reaktor 1 ist folglich gemäß der Figur 2 mittig, das bedeutet in der Mitte geschnitten. Es werden daher die Figuren 1 und 2 nachfolgend gemeinsam beschrieben. Der Reaktor 1 weist einen Reaktormantel 2 auf, welcher im Querschnitt eine kreisrunde geometrische Gestalt aufweist und sich in Längsrichtung L turmartig erstreckt. Der Reaktormantel 2 ist vollumfänglich geschlossen und weist folglich eine im Querschnitt kreisrunde geschlossene Reaktormantelwandung 20 auf. Innerhalb des Reaktormantels 2 bzw. der Reaktormantelwandung 20 ist ein Reaktorschacht 3 angeordnet. Der Reaktorschacht 3 weist eine im Querschnitt viereckige, insbesondere quadratische geometrische Gestalt auf und erstreckt sich turmartig in Längsrichtung L. Folglich umfasst der Reaktorschacht 3 zumindest vier Seitenwandungen 30, 31, 32, 33, insbesondere Reaktorschachtwandungen 30, 31, 32, 33. Wenigstens zwei der Seitenwandungen 30, 31, 32, 33, insbesondere die erste Seitenwandung 30 und die dritte Seitenwandung 32 liegen parallel zueinander. Der Reaktorschacht 3 ist ein Reaktionsraum, welcher folglich ein Reaktionsvolumen 34 aufweist, innerhalb welchem die chemische Reaktion, insbesondere die Pyrolyse von kohlenwasserstoffhaltigen Fluiden, vornehmlich kohlenwasserstoffhaltigen Gasen, stattfindet. Zwischen dem Reaktorschacht 3, insbesondere den Seitenwandungen 30, 31, 32, 33 des Reaktorschachtes 3 und dem Reaktormantel 2, insbesondere der Reaktormantelwandung 20 ist eine Reaktorausmauerung 4 vorgesehen. Diese Reaktorausmauerung 4 erstreckt sich vorteilhaft vollständig zwischen dem Reaktorschacht 3 und dem Reaktormantel 2 in Umfangsrichtung sowie in Längsrichtung L. Die Reaktorausmauerung 4 dient vornehmlich dazu thermische Energie, welche in das Reaktionsvolumen 34 des Reaktorschachtes 3 eingeleitet wird, vom Reaktormantel abzuschirmen. Des Weiteren sind in den Figuren 1 und 2 insgesamt sechs Elektroden 10, 11, 12, 13, 14, 15 gezeigt, welche an dem Reaktorschacht 3, genauer an der ersten Seitenwandung 30 und an der dritten Seitenwandung 32 des Reaktorschachtes 3 angeordnet sind. Demnach sind drei Elektroden 10, 12 und 14 an der ersten Seitenwandung 30 angeordnet, während drei weitere Elektroden 11, 13 und 15 an der dritten Seitenwandung 32 angeordnet sind. Vorteilhaft erstrecken sich die jeweiligen Elektroden 10, 11, 12, 13, 14, 15 in Querschnittsrichtung betrachtet entlang der gesamten Breite der Seitenwandungen 30, 32. Die zweite Seitenwandung 31 sowie die vierte Seitenwandung 33 weisen vornehmlich keine Elektroden auf. Jeweils einander gegenüberliegende Elektroden 10, 11, 12, 13, 14, 15 bilden ein Elektrodenpaar 101, 102, 103 aus. So bilden die Elektroden 10 und 11 das erste Elektrodenpaar 101, die Elektroden 12 und 13 das zweite Elektrodenpaar 102 und die Elektroden 14 und 15 das dritte Elektrodenpaar 103. Vorteilhaft liegen die jeweiligen Elektroden 10, 11, 12, 13, 14, 15 eines Elektrodenpaares 101, 102, 103 in Längsrichtung L betrachtet auf gleicher Höhe. Mit dem Bezugszeichen M ist das Merkmal der Mittellinie gekennzeichnet. Diese (gedachte) Mittellinie M definiert folglich die in Längsrichtung L betrachtete Mitte des Reaktors 1, insbesondere des Reaktorschachtes 3. Die Elektroden 10, 11, 12, 13, 14, 15 sind vornehmlich im Bereich, genauer in der Nähe der Mittellinie M angeordnet. Wie insbesondere in der Figur 1 gezeigt, kontaktiert zumindest das erste Elektrodenpaar 101 aus den Elektroden 10 und 11 die Mittellinie abschnittsweise. Das zweite Elektrodenpaar 102 aus den Elektroden 12, 13 und das dritte Elektrodenpaar 103 aus den Elektroden 14, 15 sind dagegen oberhalb der Mittellinie M, also in Richtung des Reaktorkopfes 5 des Reaktors1 verschoben, insbesondere in einem sich zwischen der Mittellinie M und dem Reaktorkopf 5 erstreckenden Abschnitt des Reaktorschachtes 3 angeordnet. Der sich von der Mittellinie M in Richtung des Reaktorsumpfes 6 erstreckende Abschnitt des Reaktorschachtes 3 weist dagegen keine weiteren Elektrodenpaare auf. Die Anordnung der Elektroden 10, 11, 12, 13, 14, 15 innerhalb des Reaktorschachtes 3 hinsichtlich der sich in Längsrichtung L erstreckenden Höhe des Reaktorschachtes 3 kann individuell ausgeführt werden und wird bedingt durch die gewollte Position der Beheizungszone und der sich daraus ergebenden Reaktionszone. Genauer, je nachdem, ob die Beheizungszone in einem zur Mittellinie M oberen Bereich oder unteren Bereich des Reaktorschachtes 3 ausgebildet werden soll, werden dementsprechend auch die Elektroden 10, 11, 12, 13, 14, 15 platziert. Diese variable Platzierung der Elektroden 10, 11, 12, 13, 14, 15 zeigt sich beispielsweise auch in den nachfolgenden Figuren 3, 4 und 5.

In den Figuren 3, 4 und 5 sind jeweils in einer Schnittdarstellung eine Ansicht einer Anordnung von Elektroden einer Ausführungsform des erfindungsgemäßen Reaktors 1 gezeigt.

Wie in der Figur 3 gezeigt, werden die hierbei verwendeten drei Elektrodenpaare 101, 102, 103 derart innerhalb des Reaktorschachtes 3 positioniert, dass die Elektroden des zweiten Elektrodenpaares 102 die (gedachte) Mittellinie M zumindest abschnittsweise kontaktieren und folglich in wenigstens einem Abschnitt in der Mitte des Reaktorschachtes 3 angeordnet sind. Die verbleibenden Elektrodenpaare 101 und 103 sind dann beabstandet zur Mittellinie M innerhalb des Reaktorschachtes 3 angeordnet. So sind die Elektroden des ersten Elektrodenpaares 101 in einem zwischen der Mittellinie M und dem Reaktorsumpf 6, also in einem zur Mittellinie M unteren Bereich des Reaktorschachtes 3 angeordnet, während die Elektroden des dritten Elektrodenpaares 103 in einem zwischen der Mittellinie M und dem Reaktorkopf 5, also in einem zur Mittellinie M oberen Bereich des Reaktorschachtes 3 angeordnet sind.

Wie in der Figur 4 gezeigt, ist auch die Anordnung von lediglich zwei Elektrodenpaaren 101 und 102 denkbar, wobei keines der Elektrodenpaare 101, 102, insbesondere keine der Elektroden des jeweiligen Elektrodenpaares 101, 102 die gedachte Mittellinie M auch nur abschnittsweise kontaktiert. Vielmehr sind die Elektroden des ersten Elektrodenpaares 101 in einem zwischen der Mittellinie M und dem Reaktorsumpf 6, also in einem zur Mittellinie M unteren Bereich des Reaktorschachtes 3 angeordnet, während die Elektroden des zweiten Elektrodenpaares 102 in einem zwischen der Mittellinie M und dem Reaktorkopf 5, also in einem zur Mittellinie M oberen Bereich des Reaktorschachtes 3 angeordnet sind.

Auch die Ausgestaltung mittels lediglich eines Elektrodenpaares 101 ist, wie in der Figur 5 gezeigt, denkbar. Dabei kontaktieren die jeweiligen Elektroden dieses Elektrodenpaares 101 die (gedachte) Mittellinie M zumindest abschnittsweise und erstrecken sich vorteilhaft über diese Mittellinie M in den oberen Bereich des Reaktorschachtes 3, welcher zwischen der Mittellinie M und dem Reaktorkopf 5 ausgebildet ist, genauso wie in den unteren Bereich des Reaktorschachtes 3, welcher zwischen der Mittellinie M und dem Reaktorsumpf 6 ausgebildet ist. Vornehmlich sind die Elektroden des Elektrodenpaares 101 derart angeordnet, dass eine größere Fläche der jeweiligen Elektrode des Elektrodenpaares 101 sich im oberen Bereich des Reaktorschachtes 3 befindet. Die Elektroden des Elektrodenpaares 101, sprich das Elektrodenpaar 101 ist folglich zur Mittellinie M betrachtet leicht nach oben versetzt angeordnet.

Alternative Platzierungen der Elektroden pro Elektrodenpaare 101, 102. 103 sowie eine alternative Anzahl an Elektrodenpaaren 101, 102. 103, sind denkbar. Das bedeutet, dass auch mehr als drei Elektrodenpaare 101, 102. 103 innerhalb eines Reaktorschachtes 3 angeordnet werden können. Jedoch nicht nur die Anzahl und die Platzierung der Elektrodenpaare 101, 102, 103 innerhalb eines Reaktorschachtes 3 kann variieren.

Wie in der Figur 6 gezeigt, können die Elektroden 10, 11, 12, 13, 14, 15 auch verschiedene geometrische Ausgestaltungen aufweisen. So ist die Verwendung von Gitterelektroden 16 oder kreisrunden Elektroden 17 genauso denkbar, wie der Einsatz von viereckigen, insbesondere rechteckigen Elektroden 18, 19. Auch die Größe der Elektroden 16, 17, 18, 19 kann unterschiedlich sein. So ist beispielsweise die rechteckige, großflächige Elektrode 19 derart dimensioniert, dass diese im Wesentlichen die Größe von wenigstens zwei, insbesondere drei oder mehr anderen rechteckigen Elektroden 18 umfasst und folglich auch allein bzw. mit einer geometrisch gleich gestalteten Elektrode 19 zur Erzeugung eines Elektrodenpaares in dem Reaktorschach angeordnet sein kann. Die Verwendung bzw. Anordnung von mehreren Elektrodenpaaren 101, 102, 103 innerhalb des Reaktorschachtes 3 ermöglicht vorteilhaft die Einstellung unterschiedlicher axialer Temperaturzonen. Demnach ist vorteilhaft bei einem unterschiedlichen Widerstandsverhalten des Partikelmaterials des Wanderbettes eine gezielte Einstellung der Temperatur über Feldparameter möglich.

In der Figur 7 ist ein beispielhaftes Temperaturprofil einer Ausführungsform des erfindungsgemäßen Reaktors 1 zur Darstellung des erfindungsgemäßen Verfahrens gezeigt. Das Temperaturprofil der Figur 7 wird in Verbindung mit dem prinzipiellen Aufbau des Reaktors 1, wie beispielsweise in den Figuren 1 und 2 gezeigt, erläutert. Über die x-Achse des Temperaturprofils ist dabei die Temperatur abgetragen. Als Schwellenwerte werden dabei 800°C und 1500°C beispielhaft angegeben. Über die y-Achse ist die axiale Erstreckung des Reaktorschachtes 3 in Längsrichtung L dargestellt. Die in der Figur 7 gezeigte thermische Entwicklung findet im Reaktionsvolumen 34 des Reaktorschachtes 3 eines erfindungsgemäßen Reaktors 1 statt. Über hier nicht gezeigte Einlassöffnungen/Zuführöffnungen im Reaktorsumpf 6 werden kohlenwasserstoffhaltige Fluide 40 und über hier nicht gezeigte Einlassöffnungen/Zuführöffnungen im Reaktorkopf 5 des Reaktors 1 werden Partikel 50 des Wanderbettes in den Reaktorschacht 3, insbesondere in das Reaktionsvolumen 34 des Reaktorschachtes 3 eingebracht. Die kohlenwasserstoffhaltigen Fluide 40 strömen ausgehend vom Reaktorsumpf 6 in Richtung des Reaktorkopfes 5 durch den Reaktorschacht 3 hindurch. Entgegengesetzt dazu wandern die Partikel 50 des Wanderbettes ausgehend von Reaktorkopf 5 in Richtung des Reaktorsumpfes 6 durch den Reaktorschacht 3 hindurch. Die kohlenwasserstoffhaltigen Fluide 40 können vor Eintritt in den Reaktorschacht 3 bereits vorgewärmt sein. Dabei bieten sich Temperaturen unter 800°C, insbesondere im Wesentlichen ca. 600°C an. Es ist jedoch auch denkbar, dass die kohlenwasserstoffhaltigen Fluide 40 ohne Vorwärmung in den Reaktorschacht 3 eingebracht werden. Im Wesentlichen zeitgleich werden auch die Partikel 50 des Wanderbettes in den Reaktorschacht 3 eingebracht und durchwandern auf deren Weg durch den Reaktorschacht 3 hin zum Reaktorsumpf 6 die zweite Wärmeintegrationszone W2, die Beheizungszone B, die Reaktionszone R und die erste Wärmeintegrationszone W1. In der zweiten Wärmeintegrationszone W2, welche sich zwischen der Beheizungszone B und dem Reaktorkopf 5 ausbildet, werden die Partikel 50 des Wanderbettes innerhalb des Reaktorschachtes 3 vorgewärmt bzw. vorgeheizt. Dies geschieht durch eine Übertragung von Wärmeenergie, welche von erwärmten wasserstoffhaltigen Gasen 41, welche von der Beheizungszone B kommend über hier nicht gezeigte Austrittsöffnungen/Ausführöffnungen innerhalb des Reaktorkopfes 5 den Reaktorschacht 3 verlassen, auf die Partikel 50 des Wanderbettes übergeht. In der zweiten Wärmeintegrationszone W2 findet folglich vorteilhaft eine Integration von Wärme/Wärmeenergie von der Gasphase auf die Feststoffphase statt. Die wasserstoffhaltigen Gase 41 sind ein durch die Pyrolyse der in den Reaktorschacht 3 eingebrachten kohlenwasserstoffhaltigen Fluide 40 entstandenes Reaktionsprodukt. Die Pyrolyse findet vorteilhaft in der Reaktionszone R und zumindest teilweise auch in der Beheizungszone B, vorteilhaft (auch) in dem Bereich der Überlappung von Reaktionszone R und Beheizungszone B statt. Zum Auslösen der Pyrolyse, sprich der Dissoziation von Kohlenwasserstoffen thermisch in die Bestandteile Kohlenstoff und Wasserstoff und folglich der Abspaltung von Kohlenstoff aus den kohlenwasserstoffhaltigen Fluiden 40 ist eine Mindesttemperatur von ca. 800°C erforderlich. Diese Mindesttemperatur wird vorteilhaft bereits nach Durchlaufen einer ersten Wärmeintegrationszone W1 erreicht. In dieser ersten Wärmeintegrationszone W1 erfolgt ein Übertrag von Wärmeenergie ausgehend von den beladenen Partikel 51 des Wanderbettes, welche auf deren Weg zum Reaktorsumpf 6 bereits die Beheizungszone B durchwandert haben, auf die kohlenwasserstoffhaltigen Fluide 40, welche in Richtung der Beheizungszone B strömen. In der ersten Wärmeintegrationsstufe W1 findet folglich vorteilhaft eine Integration von Wärme/Wärmeenergie von der Feststoffphase auf die Gasphase statt. Umso näher die kohlenwasserstoffhaltigen Fluide 40 der Beheizungszone B kommen, um so wärmer werden diese, aufgrund der stetigen Aufnahme von Wärmeenergie über die beladenen Partikel 51 des Wanderbettes. Als beladene Partikel 51 des Wanderbettes sind im Sinne dieser Erfindung Partikel zu verstehen, welche bereits Kohlenstoff bzw. Kohlenstoffatome aus den kohlenwasserstoffhaltigen Fluiden 40 aufgenommen haben. Die Kohlenstoffe lagern sich vornehmlich auf und zwischen die Partikel 50 des Wanderbettes an. Diese Anlagerung beeinflusst das elektrische Widerstandsverhalten des Wanderbettes bzw. der Schüttung des Wanderbettes, welches gravimetrisch durch den Reaktorschacht 3 wandert. Durch die beispielhaft in der Figur 1 gezeigte Anordnung der Elektroden 10, 11, 12, 13, 14, 15 innerhalb eines zumindest viereckigen Reaktorschachtes 3 und dem daraus resultierenden elektrischen Potentialfeld sowie der Fließrichtung des Wanderbettes, schiebt das Wanderbett bzw. die Partikel 50 des Wanderbettes neues Partikelmaterial in die Beheizungszone B und verhindert folglich eine negative Beeinflussung des genannten Widerstandsverhaltens. Die Beheizungszone B ist im Rahmen der Erfindung als eine Zone zu verstehen, innerhalb welcher die Elektroden 10, 11, 12, 13, 14, 15 zumindest abschnittsweise, vorteilhaft vollständig positioniert bzw. angeordnet sind. Genauer erzeugen die Elektroden 10, 11, 12, 13, 14, 15 aufgrund deren Wärmeeintrag die Beheizungszone B. Vorteilhaft behindern die Elektroden 10, 11, 12, 13, 14, 15 den Fluss der Partikel 50 des Wanderbettes nicht. Bei Erreichen einer Erwärmung der kohlenwasserstoffhaltigen Fluide von ca. 800°C beginnt folglich der Pyrolyseprozess und die Reaktionszone R bildet sich aus. Das bedeutet, dass die Kohlenstoffe der kohlenwasserstoffhaltigen Fluide 40 in Richtung der Partikel 50 oder auch der zumindest teilweise bereits beladenen Partikel 51 des Wanderbettes wandern. Dieser chemische Reaktionsprozess kann demnach auch bereits vor der Beheizungszone B und demnach vor Erreichen der Zone, welche durch die Elektroden 10, 11, 12, 13, 14, 15 ausgebildet wird, erfolgen, allein durch die Erwärmung der kohlenwasserstoffhaltigen Fluide 40 durch die Wärmeenergie der beladenen Partikel 51 des Wanderbettes. Innerhalb der Beheizungszone B werden die Partikel 50 des Wanderbettes und dadurch folglich auch die kohlenwasserstoffhaltigen Fluide 40 auf eine Maximaltemperatur von vorteilhaft 1200°C bis 1700°C erwärmt. Innerhalb dieser Beheizungszone B schreitet die Pyrolyse fort, solange bis im Wesentlichen alle Kohlenstoffe aus den kohlenwasserstoffhaltigen Fluiden 40 auf die Partikel 50 des Wanderbettes übergegangen sind. Zurück bleiben die wasserstoffhaltigen Fluide 41 und die beladenen oder zumindest teilweise beladenen Partikel 51 des Wanderbettes. Demnach ist es auch denkbar, dass die chemische Reaktion bereits abgeschlossen ist, obwohl die kohlenwasserstoffhaltigen Fluide 40 die Beheizungszone B noch nicht vollständig durchströmt haben. Demnach ist es denkbar, dass die Reaktionszone R nicht zusätzlich die gesamte Länge der Beheizungszone B umfasst, sondern auch diese nur teilweise überlappt.

### Bezugszeichenliste

- 1: Reaktor
- 2: Reaktormantel
- 3: Reaktorschacht
- 4: Reaktorausmauerung
- 5: Reaktorkopf
- 6: Reaktorsumpf

- 10, 11, 12, 13, 14, 15: Elektroden
- 16: Gitterelektrode
- 17: kreisrunde Elektrode
- 18: viereckige /rechteckige Elektrode
- 19: viereckige große Elektrode
- 20: Reaktormantelwandung

- 30, 31, 32, 33: Reaktorschachtwandungen /Seitenwandungen
- 34: Reaktionsvolumen

- 40: kohlenwasserstoffhaltiges Fluid
- 41: wasserstoffhaltiges Fluid

- 50: unbesetzte Partikel des Wanderbettes
- 51: besetzte Partikel des Wanderbettes

- 101,102,103: Elektrodenpaar

- B: Beheizungszone
- L: Längsrichtung
- M: Mittellinie
- R: Reaktionszone
- W1: erste Wärmeintegrationszone
- W2: zweite Wärmeintegrationszone
- x, y: Achsen

## Patentansprüche

1. Reaktor (1) zumindest zur Pyrolyse von kohlenwasserstoffhaltigen Fluiden (40) zumindest zur Erzeugung von wenigstens wasserstoffhaltigen Fluiden (41), wobei der Reaktor (1) einen Reaktormantel (2) sowie einen innerhalb des Reaktormantels (2) angeordneten Reaktorschacht (3) aufweist und zwischen dem Reaktormantel (2) und dem Reaktorschacht (3) eine Reaktorausmauerung (4) zumindest zur thermischen Abdichtung des Reaktorschachtes (3) gegen den Reaktormantel (2) angeordnet ist,
**dadurch gekennzeichnet, dass**
der Reaktorschacht (3) im Querschnitt eine Geometrie mit vier oder mehr als vier Ecken aufweist, wobei an zwei einander gegenüberliegenden Seitenwandungen (30, 31, 32, 33) des Reaktorschachtes (3) jeweils zumindest eine Elektrode (10, 11, 12, 13, 14, 15) zur Erzeugung thermischer Energie angeordnet ist.

2. Reaktor (1) gemäß Anspruch 1,
**dadurch gekennzeichnet, dass**
die einander gegenüberliegenden Elektroden (10, 11, 12, 13, 14, 15) in vertikaler Längsrichtung (L) des Reaktors (1) betrachtet zumindest abschnittsweise in der Mitte des Reaktorschachtes (3) angeordnet sind.

3. Reaktor (1) gemäß einem der vorangegangenen Ansprüche,
**dadurch gekennzeichnet, dass**
an den zwei einander gegenüberliegenden Seitenwandungen (30, 31, 32, 33) des Reaktorschachtes (3) jeweils zumindest zwei oder mehr Elektroden (10, 11, 12, 13, 14, 15) zur Erzeugung thermischer Energie angeordnet sind, wobei zumindest eine der Elektroden (10, 11, 12, 13, 14, 15) pro Seitenwandung (30, 31, 32, 33) des Reaktorschachtes (3) in vertikaler Längsrichtung (L) des Reaktors (1) betrachtet zumindest abschnittsweise in der Mitte des Reaktorschachtes (3) angeordnet ist oder jede der Elektroden (10, 11, 12, 13, 14, 15) pro Seitenwandung (30, 31, 32, 33) zumindest oberhalb oder unterhalb der Mitte des Reaktorschachtes (3) angeordnet sind.

4. Reaktor (1) gemäß einem der vorangegangenen Ansprüche,
**dadurch gekennzeichnet, dass**
der Reaktor (1) einen Reaktorkopf (5) sowie einen Reaktorsumpf (6) aufweist, wobei der Reaktorkopf (5) sowie der Reaktorsumpf (6) jeweils zumindest zeitweise verschließbare Zuführöffnungen sowie Ausführöffnungen aufweisen, durch welche zumindest Fluide oder Feststoffe, insbesondere Partikel, einzubringen oder auszubringen sind, sodass zur Erzeugung eines Wanderbettes durch den Reaktorkopf (5) zumindest zeitweise kontinuierlich Partikel (50) in den Reaktorschacht (3) eingebracht sind.

5. Reaktor (1) gemäß Anspruch 4,
**dadurch gekennzeichnet, dass**
die Elektroden (10, 11, 12, 13, 14, 15) derart angeordnet sind, dass diese ein elektrisches Feld erzeugen, welches zumindest abschnittsweise orthogonal zur Bewegungsrichtung der sich durch den Reaktorschacht (3) bewegenden Partikel (50) des Wanderbettes ausgerichtet ist.

6. Verfahren zumindest zur Pyrolyse von kohlenwasserstoffhaltigen Fluiden (40) zumindest zur Erzeugung von wenigstens wasserstoffhaltigen Fluiden (41), wobei die kohlenwasserstoffhaltigen Fluide (40) einem Reaktorschacht (3) eines Reaktors (1) in Gegenströmung zu einem aus Partikeln (50) bestehenden Wanderbettes des Reaktors zugeführt werden, wobei zumindest die Partikel (50) des Wanderbettes oder die kohlenwasserstoffhaltigen Fluide (40) mittels in dem Reaktorschacht angeordneter Elektroden (10, 11, 12, 13, 14, 15) zur Erzeugung thermischer Energie auf eine definierte Temperatur im Bereich zwischen 800-1600°C, vorzugsweise zwischen 800-1400°C aufgeheizt werden
**dadurch gekennzeichnet, dass**
das Verfahren in einem Reaktor (1) gemäß einem der vorangegangenen Ansprüche 1 bis 5 durchgeführt wird.

7. Verfahren nach Anspruch 6,
**dadurch gekennzeichnet, dass**
die Partikel (50) des Wanderbettes gravimetrisch von einem Reaktorkopf (5) des Reaktors (1) zu einem Reaktorsumpf (6) des Reaktors (1) in vertikaler Längsrichtung (L) des Reaktors (1) nach unten wandern.

8. Verfahren nach Anspruch 6 oder 7,
**dadurch gekennzeichnet, dass**
die Elektroden (10, 11, 12, 13, 14, 15) ein elektrisches Feld erzeugen, welches zumindest abschnittsweise orthogonal zur Bewegungsrichtung der sich durch den Reaktorschacht (3) bewegenden Partikel (50) des Wanderbettes ausgerichtet ist.

9. Verfahren nach einem der Ansprüche 6 bis 8,
**dadurch gekennzeichnet, dass**
innerhalb des Reaktorschachtes (3) eine erste Wärmeintegrationszone (W1), eine Reaktionszone (R), eine Beheizungszone (B) und eine zweite Wärmeintegrationszone (W2) ausgebildet werden, wobei die einzelnen Zonen ausgehend vom Reaktorsumpf (6) des Reaktors (1) zum Reaktorkopf (5) des Reaktors (1), in vertikaler Längsrichtung (L) des Reaktors (1) betrachtet, nacheinander ausgebildet werden und sich zumindest teilweise abschnittsweise überlappen.

10. Verfahren nach Anspruch 9,
**dadurch gekennzeichnet, dass**
die Pyrolyse zumindest in der Reaktionszone (R) oder in der Beheizungszone (B) stattfindet.

11. Verfahren nach einem der Ansprüche 9 oder 10,
**dadurch gekennzeichnet, dass**
die kohlenwasserstoffhaltigen Fluide (40) in der ersten Wärmeintegrationszone (W1) bereits durch die den kohlenwasserstoffhaltigen Fluiden (40) entgegenströmenden Partikeln (51) des Wanderbettes, welches bereits die Beheizungszone (B) durchwandert haben, zumindest vorgewärmt werden.

12. Verfahren nach einem der Ansprüche 9 bis 11,
**dadurch gekennzeichnet, dass**
die in den Reaktorschacht (3) eintretenden Partikel (50) des Wanderbettes in der zweiten Wärmeintegrationszone (W2) bereits durch ein den Partikeln (50) des Wanderbettes entgegenströmendes aufgeheiztes und aus den kohlenwasserstoffhaltigen Fluiden (40) resultierendes wasserstoffhaltiges Fluides (41), welches bereits die Beheizungszone (B) durchwandert und Kohlenstoff abgegeben hat, zumindest vorgewärmt werden.

13. Verfahren nach einem der Ansprüche 6 bis 12,
**dadurch gekennzeichnet, dass**
die mit Kohlenstoff beladenen Partikel (51) des Wanderbettes über den Reaktorsumpf (6) des Reaktors (1) aus dem Reaktorschacht (3) ausgebracht werden.

## Claims

1. A reactor (1) at least for pyrolysis of hydrocarbon-containing fluids (40) at least for production of at least hydrogen-containing fluids (41), wherein
the reactor (1) has a reactor shell (2) and a reactor shaft (3) disposed within the reactor shell (2), and a reactor lining (4) at least for thermal sealing of the reactor shaft (3) with respect to the reactor shell (2) is disposed between the reactor shell (2) and the reactor shaft (3),
**characterized in that**
the reactor shaft (3) has a geometry with four or more than four vertices in cross section, where at least one electrode (10, 11, 12, 13, 14, 15) for generation of thermal energy is disposed on each of two mutually opposite side walls (30, 31, 32, 33) of the reactor shaft (3).

2. The reactor (1) as claimed in claim 1,
**characterized in that**
the mutually opposite electrodes (10, 11, 12, 13, 14, 15), viewed in vertical longitudinal direction (L) of the reactor (1), are disposed in the middle of the reactor shaft (3) at least in sections.

3. The reactor (1) as claimed in either of the preceding claims,
**characterized in that**
there are at least two or more electrodes (10, 11, 12, 13, 14, 15) for generation of thermal energy disposed on each of the two mutually opposite side walls (30, 31, 32, 33) of the reactor shaft (3), where at least one of the electrodes (10, 11, 12, 13, 14, 15) per side wall (30, 31, 32, 33) of the reactor shaft (3), viewed in vertical longitudinal direction (L) of the reactor (1), is disposed in the middle of the reactor shaft (3) at least in sections, or each of the electrodes (10, 11, 12, 13, 14, 15) per side wall (30, 31, 32, 33) is disposed at least above or below the middle of the reactor shaft (3).

4. The reactor (1) as claimed in any of the preceding claims,
**characterized in that**
the reactor (1) has a reactor head (5) and a reactor bottom (6), where the reactor head (5) and the reactor bottom (6) each have at least intermittently closable feed openings and discharge openings through which at least fluids or solids, especially particles, can be introduced or discharged, such that, for creation of a moving bed, particles (50) are continuously introduced into the reactor shaft (3) at least intermittently through the reactor head (5).

5. The reactor (1) as claimed in claim 4,
**characterized in that**
the electrodes (10, 11, 12, 13, 14, 15) are arranged in such a way that they generate an electrical field aligned orthogonally at least in sections to the direction of movement of the particles (50) of the moving bed that move through the reactor shaft (3).

6. A method at least for pyrolysis of hydrocarbon-containing fluids (40) at least for production of at least hydrogen-containing fluids (41), wherein the hydrocarbon-containing fluids (40) are fed to a reactor shaft (3) of a reactor (1) in countercurrent to a moving bed of the reactor that consists of particles (50), wherein at least the particles (50) of the moving bed or the hydrocarbon-containing fluids (40), by means of electrodes (10, 11, 12, 13, 14, 15) for generation of thermal energy that are disposed in the reactor shaft, are heated up to a defined temperature in the range between 800-1600°C, preferably between 800-1400°C, **characterized in that** the method is conducted in a reactor (1) as claimed in any of the preceding claims 1 to 5.

7. The method as claimed in claim 6,
**characterized in that**
the particles (50) of the moving bed migrate downward gravimetrically from a reactor head (5) of the reactor (1) to a reactor bottom (6) of the reactor (1) in vertical longitudinal direction (L) of the reactor (1).

8. The method as claimed in claim 6 or 7,
**characterized in that**
the electrodes (10, 11, 12, 13, 14, 15) generate an electrical field aligned orthogonally at least in sections to the direction of movement of the particles (50) of the moving bed that move through the reactor shaft (3).

9. The method as claimed in any one of claims 6 to 8,
**characterized in that**
a first heat integration zone (W1), a reaction zone (R), a heating zone (B) and a second heat integration zone (W2) are formed within the reactor shaft (3), where the individual zones, proceeding from the reactor bottom (6) of the reactor (1) to the reactor head (5) of the reactor (1), viewed in vertical longitudinal direction (L) of the reactor (1) are successive and at least partly overlap in sections.

10. The method as claimed in claim 9,
**characterized in that**
the pyrolysis takes place at least in the reaction zone (R) or in the heating zone (B).

11. The method as claimed in either of claims 9 and 10,
**characterized in that**
the hydrocarbon-containing fluids (40) are already at least preheated in the first heat integration zone (W1) by the particles (51) of the moving bed which have already passed through the heating zone (B) and move in countercurrent to the hydrocarbon-containing fluids (40).

12. The method as claimed in any of claims 9 to 11,
**characterized in that**
the particles (50) of the moving bed that enter the reactor shaft (3) are already at least preheated in the second heat integration zone (W2) by a heated hydrogen-containing fluid (41) which flows in countercurrent to the particles (50) of the moving bed, results from the hydrocarbon-containing fluids (40) and has already passed through the heating zone (B) and released carbon.

13. The method as claimed in any one of claims 6 to 12,
**characterized in that**
the carbon-laden particles (51) in the moving bed are discharged from the reactor shaft (3) via the reactor bottom (6) of the reactor (1).

## Revendications

1. Réacteur (1) au moins pour la pyrolyse de fluides contenant des hydrocarbures (40) au moins pour la production de fluides (41) contenant au moins de l'hydrogène, dans lequel le réacteur (1) présente une enveloppe de réacteur (2) ainsi qu'un puits de réacteur (3) disposé à l'intérieur de l'enveloppe de réacteur (2) et un garnissage de réacteur (4) est disposé entre l'enveloppe de réacteur (2) et le puits de réacteur (3) au moins pour l'étanchéité thermique du puits de réacteur (3) contre l'enveloppe de réacteur (2),
**caractérisé en ce que**
le puits de réacteur (3) présente en section transversale une géométrie avec quatre ou plus de quatre coins, au moins une électrode (10, 11, 12, 13, 14, 15) étant disposée sur chacune des deux parois latérales (30, 31, 32, 33) opposées l'une à l'autre du puits de réacteur (3) pour produire de l'énergie thermique.

2. Réacteur (1) selon la revendication 1,
**caractérisé en ce que**
les électrodes (10, 11, 12, 13, 14, 15) opposées les unes aux autres sont disposées, vu dans la direction longitudinale verticale (L) du réacteur (1), au moins par sections au milieu du puits de réacteur (3).

3. Réacteur (1) selon l'une des revendications précédentes,
**caractérisé en ce que**
sur les deux parois latérales (30, 31, 32, 33) opposées l'une à l'autre du puits de réacteur (3) sont disposées respectivement au moins deux ou plusieurs électrodes (10, 11, 12, 13, 14, 15) pour la production d'énergie thermique, au moins une des électrodes (10, 11, 12, 13, 14, 15) étant disposée par paroi latérale (30, 31, 32, 33), 33) du puits de réacteur (3) est disposée, vu dans la direction longitudinale verticale (L) du réacteur (1), au moins par sections au milieu du puits de réacteur (3) ou chacune des électrodes (10, 11, 12, 13, 14, 15) par paroi latérale (30, 31, 32, 33) est disposée au moins au-dessus ou au-dessous du milieu du puits de réacteur (3).

4. Réacteur (1) selon l'une des revendications précédentes,
**caractérisé en ce que**
le réacteur (1) présente une tête de réacteur (5) ainsi qu'un fond de réacteur (6), la tête de réacteur (5) ainsi que le fond de réacteur (6) présentant chacun des ouvertures d'alimentation pouvant être fermées au moins temporairement ainsi que des ouvertures d'évacuation, par lesquelles au moins des fluides ou des matières solides, en particulier des particules, peuvent être introduits ou évacués, de sorte que, pour générer un lit mobile, des particules (50) sont introduites au moins temporairement en continu dans le puits de réacteur (3) par la tête de réacteur (5).

5. Réacteur (1) selon la revendication 4,
**caractérisé en ce que**
les électrodes (10, 11, 12, 13, 14, 15) sont disposées de telle sorte qu'elles génèrent un champ électrique qui est orienté, au moins par sections, orthogonalement à la direction de déplacement des particules (50) du lit mobile qui se déplacent à travers le puits de réacteur (3).

6. Procédé au moins pour la pyrolyse de fluides contenant des hydrocarbures (40) au moins pour la production de fluides contenant au moins de l'hydrogène (41), les fluides contenant des hydrocarbures (40) étant amenés à un puits de réacteur (3) d'un réacteur (1) à contre-courant d'un lit mobile du réacteur constitué de particules (50), au moins les particules (50) du lit mobile ou les fluides contenant des hydrocarbures (40) étant chauffés à une température définie dans la plage comprise entre 800-1600°C, de préférence entre 800-1400°C, au moyen d'électrodes (10, 11, 12, 13, 14, 15) disposées dans le puits de réacteur pour produire de l'énergie thermique
**caractérisé en ce que**
le procédé est mis en œuvre dans un réacteur (1) selon l'une quelconque des revendications 1 à 5 précédentes.

7. Procédé selon la revendication 6,
**caractérisé en ce que**
les particules (50) du lit mobile migrent gravimétriquement vers le bas depuis une tête (5) du réacteur (1) vers un fond (6) du réacteur (1) dans la direction longitudinale verticale (L) du réacteur (1).

8. Procédé selon la revendication 6 ou 7,
**caractérisé en ce que**
les électrodes (10, 11, 12, 13, 14, 15) génèrent un champ électrique qui est orienté, au moins par sections, orthogonalement à la direction de déplacement des particules (50) du lit mobile qui se déplacent à travers le puits de réacteur (3).

9. Procédé selon l'une quelconque des revendications 6 à 8,
**caractérisé en ce que**
on forme à l'intérieur du puits de réacteur (3) une première zone d'intégration thermique (W1), une zone de réaction (R), une zone de chauffage (B) et une deuxième zone d'intégration thermique (W2), les différentes zones étant formées successivement en partant du fond (6) du réacteur (1) vers la tête (5) du réacteur (1), considérées dans la direction longitudinale verticale (L) du réacteur (1), et se chevauchant au moins partiellement par tronçons.

10. Procédé selon la revendication 9,
**caractérisé en ce que**
la pyrolyse a lieu au moins dans la zone de réaction (R) ou dans la zone de chauffage (B).

11. Procédé selon l'une des revendications 9 ou 10,
**caractérisé en ce que**
les fluides hydrocarbonés (40) sont déjà au moins préchauffés dans la première zone d'intégration thermique (W1) par les particules (51) du lit mobile circulant en sens inverse des fluides hydrocarbonés (40) et ayant déjà traversé la zone de chauffage (B).

12. Procédé selon l'une quelconque des revendications 9 à 11,
**caractérisé en ce que**
les particules (50) du lit mobile entrant dans le puits de réacteur (3) sont déjà au moins préchauffées dans la deuxième zone d'intégration thermique (W2) par un fluide hydrogéné (41) circulant à contre-courant des particules (50) du lit mobile et résultant des fluides hydrocarbonés (40) qui ont déjà traversé la zone de chauffage (B) et émis du carbone.

13. Procédé selon l'une quelconque des revendications 6 à 12,
**caractérisé en ce que**
les particules (51) chargées de carbone du lit mobile sont évacuées hors du puits de réacteur (3) par le fond (6) du réacteur (1).
